Europäisches Patentamt

European Patent Office

Office européen des brevets

(11) Publication number: **0 226 677**
**A1**

## EUROPEAN PATENT APPLICATION

(21) Application number: 85309427.4

(51) Int. Cl.4: **C08L 51/06**

(22) Date of filing: 23.12.85

(43) Date of publication of application:
01.07.87 Bulletin 87/27

(84) Designated Contracting States:
**BE DE FR GB IT NL**

(71) Applicant: **ATLANTIC RICHFIELD COMPANY**
**515 South Flower Street**
**Los Angeles California 90071(US)**

(72) Inventor: **Dean, Barry D.**
**38 Pine Valley Road**
**Broomall, PA 19008(US)**

(74) Representative: **Cropp, John Anthony David et al**
**MATHYS & SQUIRE 10 Fleet Street**
**London, EC4Y 1AY(GB)**

(54) **Molding compounds.**

(57) The impact resistance of molded thermoformable plastic resin compounds is improved by incorporating into the thermoformable plastic resin an elastomer grafted with a polymer matrix formed by the reaction of an elastomer having dialkyl or alkyl aryl peroxide functionality with a free radical polymerizable monomer.

EP 0 226 677 A1

## MOLDING COMPOUNDS

This invention relates to improved molding compounds.

More specifically, this invention relates to molding compounds having improved impact resistance.

In one of its more specific aspects, this invention relates to the modification of thermoformable plastic resin compounds by the introduction thereinto of an elastomer grafted with a polymer matrix.

The prior art teaches a variety of techniques permitting peroxide functionalization of olefin/α -olefin co- and terpolymers. U.S. Patents 3,458,598; 3,652,724; 3,739,042; and 3,949,018 teach peroxide functionalization of only the polymer chain end. Particularly, U.S. 3,949,018 teaches the end group peroxidation of a living olefin/α -olefin polymer chain. The mediating species is a transition metal coordinated to the growing end of the olefin/α -olefin polymer. According to these teachings a maximum of two peroxide groups per polymer chain is possible, more accurately a maximum of two peroxide groups only at the ends of the polymer chain. U.S. 3,800,007 teaches polymer end group functionalization (peroxidation) through the use of a specially designed peroxide containing chain transfer agent. This approach permits only polymer chain end functionalization. U.S. Patents 3,288,739 and 3,489,822 as well as British Patent 877,443 teach random peroxidation of olefin/α -olefin copolymers as well as olefin/α -olefin/non-conjugated diene terpolymers with molecular oxygen as the source for the active peroxide oxygen in the form of hydroperoxides. U.S. Patents 3,981,841 and 4,172 disclose the composition of poly(2,6-dimethyl-1,4-phenylene)ether and an alkenyl aromatic resin modified with an ethylene/propylene/diene terpolymer. The preparation of the rubber modified alkenyl aromatic resin is conducted insitu without the elastomer having random dialkyl or alkyl-aryl peroxide functionality and therefore differs from the teachings of this invention.

The present invention provides a novel elastomer grafted with from about 40 to about 60 weight percent of a polymer matrix formed by reacting an elastomer having random dialkyl or alkyl aryl peroxide functionality with a free radical polymerizable monomer, the resulting grafted elastomer is incorporated into a thermoformable plastic resin which is thermodynamically miscible with the grafted polymer matrix to improve the impact resistance of the molded product.

According to this invention there is provided a moldable composition comprising a thermoformable plastic resin and an elastomer grafted with from about 40 to about 60 weight percent of a polymer matrix formed by reacting an elastomer having random dialkyl or alkyl aryl peroxide functionality with a free radical polymerizable monomer, the polymer matrix being thermodynamically miscible with the thermoformable plastic resin.

Also, according to the present invention there is provided a method of producing a molded composition which comprises forming a blend comprising a thermoformable plastic resin and an elastomer grafted with from about 40 to about 60 weight percent of a polymer matrix formed by reacting an elastomer having random dialkyl or alkyl aryl peroxide functionality with a free radical polymerizable monomer, the polymer matrix being thermodynamically miscible with the thermoformable plastic resin, and molding the resulting blend.

Also, according to the present invention there is provided a molded composition comprising a continuous phase comprising a thermoformable plastic resin and a disperse phase within the continuous phase, the disperse phase being an elastomer grafted with from about 40 to about 60 weight percent of a polymer matrix formed by reacting an elastomer having random dialkyl or alkyl aryl peroxide functionality with a free radical polymerizable monomer, in which the polymer matrix is thermodynamically miscible with the thermoformable plastic resin and is part of the continuous phase, the elastomer grafted with a polymer matrix being present in the thermoformable plastic resin in an amount sufficient to improve the impact resistance of the thermoformable plastic resin upon molding.

According to this invention there is also provided a method of improving the impact strength properties of a thermoformable plastic resin upon molding which comprises incorporating into a continuous phase thermoformable plastic resin a disperse phase comprising an elastomer grafted with from about 40 to about 60 weight percent of a polymer matrix formed by reacting an elastomer having random dialkyl or alkyl aryl peroxide functionality with a free radical polymerizable monomer, in which the the polymer matrix is thermodynamically miscible with the thermoformable plastic resin and is part of the continuous phase, the elastomer grafted with a polymer matrix being present in the thermoformable plastic resin in an amount sufficient to improve the impact resistance of the thermoformable plastic resin upon molding.

Two or more polymers are said to be thermodynamically miscible when the free energy of mixing is negative. Thermodynamic miscibility is said to exist when a mixture of two or more polymers results in a material exhibiting a single, well defined glass transition temperature.

As used throughout this specification the term " thermoformable plastic resin" means a polymeric material which can be melted and subsequently formed into a shaped article.

Any suitable thermoformable plastic resin can be employed in the molding compounds of this invention.

Examples of suitable thermoformable plastic resins include: (1) thermoplastic resins such as polystyrenics based on styrene and one or more of the following monomers: maleic anhydride, methacrylic acid, dibromostyrene, N-phenylmaleimide, acrylonitrile, methylmethacrylate, maleimide, and the like; poly(vinyl chloride); nylons; polyphenylene oxide; polycarbonate; polyacrylates; polyesters and the like, and their mixtures and (2) thermosetting resins such as unsaturated polyesters, epoxies and the like, and their mixtures.

The elastomer employed in this invention is an elastomer having pendant allylic, benzylic or conjugated unsaturation at levels within the range of from about 1 to about 20 wt%.

Suitable elastomers are olefin/α-olefin/nonconjugated diene terpolymers, generally known as EPDM rubbers and butyl rubber. EPDM rubbers are preferred.

More specifically, the EPDM rubbers suitable for use in making the peroxidized EPDM's usable in this invention are based on mono olefins having the structural formula $CH_2$-CHR in which R may be a hydrogen atom or a saturated alkyl group such as methyl, ethyl, n-propyl, isopropyl and the like. In addition, the EPDM rubbers are based on non-conjugated straight-chain or cyclic diene hydrocarbons which are copolymerizable with the above mono olefins. Examples of suitable non-conjugated straight-chain diene hydrocarbons copolymerizable with mono olefins are 1,4-pentadiene, 1,4-hexadiene, 1,5-hexadiene and the like. Examples of suitable cyclic diene hydrocarbons are bicyclo[2,2,1] hepta-2,5-diene, dicyclopentadiene, tricyclopentadiene and tetracyclopentadiene. EPDM rubbers most preferred are terpolymer structures in which two mono olefins, ethylene and propylene, and one non-conjugated diene hydrocarbon are used. Most preferred for the non-conjugated diene hydrocarbon are 1,4-hexadiene and dicyclopentadiene. The EPDM rubber should comprise 1 to 15% by weight of the non-conjugated diene hydrocarbon and 85 to 99% by weight of the mono olefins. The preferred ratio of the mono olefins, ethylene and propylene, should be 20/80 to 80/20, preferably between 35/65 to 65/35. Ethylene-propylene-ethylidene norbornene is not suitable for use in the practice of this invention.

Methods for making these rubbers are well known and thoroughly described in U.S. 3,000,866 and U.S. 3,000,867, the teachings of which are incorporated herein by reference thereto.

The peroxidized elastomer used in the practice of this invention is prepared as follows. The elastomer is dissolved in a solvent, preferably at a temperature within the range of from about 60-80°C. The resulting rubber solution is then treated with an oxidizing agent in the presence of a catalyst. The oxidizing agent is an alkyl or aryl hydroperoxide but, most preferably is t-butyl hydroperoxide. The catalyst is selected from any metal in Group VIIa, VIII, Ib or IIb with the appropriate choice of counter ion so as to promote solubility of the catalyst in the rubber solution. A small quantity of tetrahydrofuran or ethanol (absolute) may be added to enhance the solubility of the catalyst in the rubber solution. The peroxidation reaction is run for from about 4 to about 20 hours at a temperature preferably within the range of from about 60 to about 80°C.

Suitable solvents for dissolving the elastomer include various aromatic solvents such as benzene, t-butyl-benzene, toluene, xylenes, and halogenated benzene, such as chlorobenzene; however, most preferred are chlorobenzene and t-butylbenzene.

The catalyst employed to produce the peroxidized elastomer is based on metals of Group VIIa, VIII, Ib or IIb. The preferred metals are cobalt (Group VIII) or copper (Group Ib). Preferred catalysts are Cobalt (II) acetate, cobalt (II) propionate, cobalt (II) acetyl acetonate, cobalt (II) 2-ethyl hexanoate, cobalt (II) naphthenate, copper (I) acetate, copper (I) chloride, copper (I) acetylacetonate, copper (I) napthenate, or copper - (I) ethylacetoacetate. Most preferred are cobalt (II) acetylacetonate, cobalt (II) napthenate, copper (I) acetate, copper (I) chloride and copper (I) acetyl acetonate.

The peroxidized elastomer produced as described above is then used to initiate the polymerization of any free radical polymerizable monomer or mixture of monomers and thus form an elastomer grafted with a polymer matrix employed in this invention. Suitable free radical polymerizable monomers include: styrene, α-methylstyrene, p-methylstyrene, p-chlorostyrene, p-bromostyrene, dibromostyrene, p-cyanostryene, methyl methacrylate, methacrylic acid, acrylic acid, methyl acrylate, n-butyl acrylate, acrylonitrile, maleic anhydride, citraconic anhydride, maleimide, N-methylmaleimide, N-ethyl maleimide, N-phenyl maleimide, N-4(-methyl)phenyl maleimide, N-(4-chloro)phenyl maleimide, N-(4-bromo)phenyl maleimide, N-(3-methyl)-phenyl maleimide, N-(3-chloro)phenyl maleimide, N-(3-bromo)phenyl maleimide, N-(2-methyl)phenyl maleimide, N-(2-chloro)phenyl maleimide, N-(2-bromo)phenyl maleimide, methacrylonitrile, p-vinyl benzoic acid, and vinyl chloride.

3

The peroxidized elastomer produced as described above typically exhibits 0.05 to 0.1 weight percent peroxide, which results in 40 to 60% of the polymer formed from the polymerization of the monomer or of monomer mixture, being grafted. The high level of grafting allows the elastomer grafted with a polymer matrix to function as an impact modifier for any non-rubber modified thermoformable plastic resin which is - (1) thermodynamically miscible with the grafted polymer matrix or (2) identical in composition to (and thus thermodynamically miscible with) the grafted polymer matrix

The peak molecular weight of the peroxidized elastomer should be between 100,000 to 1,000,000; most preferably between 100,000 to 400,000. The peak molecular weight of the grafted polymer matrix should be between 10,000 to 300,000; most preferably between 50,000 to 150,000. And, the peak molecular weight of the thermoformable plastic resin should be between 100,000 to 400,000, most preferably between 100,000 to 250,000.

The thermoformable plastic resin is melt compounded with the elastomer grafted with a polymer matrix on conventional processing equipment.

Preferably, the elastomer grafted with a polymer matrix is stabilized prior to blending with about 1 weight percent of any conventional stabilizer. The preferred stabilizer is a 50:50 mixture of Ethanox® 330 - (Ethyl Corp.) [1,3,5-trimethyl-2,4,6-tris(3,5-di-tert-butyl-4-hydroxybenzyl) benzene] and Mark® 2112 (Wilco Chemical Corp.) tris (2,4-di-tert-butyl-phenyl)phosphite.

Moreover, the thermoformable plastic resin can be blended with the elastomer grafted with a polymer matrix in an amount within the range of from about 50 to about 99 weight percent of the thermoformable plastic resin to about 50 to about 1 weight percent of the elastomer grafted with a polymer matrix. Preferably, the resins will be employed within the range of from about 60 to about 90 weight percent thermoformable plastic resin to about 40 to about 10 weight percent of the elastomer grafted with a polymer matrix. Best results are obtained when employing from about 60 to about 80 weight percent thermoformable plastic resin to about 40 to about 20 weight percent of the elastomer grafted to a polymer matrix.

The molded compounds of this invention can also include other ingredients such as extenders, processing aids, pigments, mold release agents and the like, for their conventionally employed purpose. Also, reinforcing fillers in amounts sufficient to impart reinforcement can be used, such as titanium dioxide, potassium titanate and titanate whiskers, glass flakes and chopped glass fibers.

The following examples serve to demonstrate the invention. Evaluation of material properties was performed based on the following ASTM standard tests: flexural modulus (D-790), tensile strength (D-638), elongation (D-638), notched Izod (D-256) and DTUL(deflection temperature under load, 1/8" at 264 psi. (D-648). Gardner falling weight index was established using a 1-1/4" diameter orifice and an 8 pound 1/2" diameter weight. Glass transition temperature was determined by differential scanning calorimetry.

## Example 1

Using substantially the procedure of Example 1 of Ser. No. 589,368, a peroxidized elastomer was prepared as follows.

In a 4-liter resin kettle 400 grams of an ethylene/propylene/dicyclopentadiene rubber containing 8.5 percent by weight of dicyclopentadiene termonomer were dissolved in 2500 grams of a solvent mixture comprised of 75 percent t-butylbenzene and 25% chlorobenzene. The EPDM rubber dissolved readily in two hours by heating the solution to 70°C. The resin kettle was charged with 120 grams of 40% anhydrous t-butylhydroperoxide in toluene (Prepared by extraction of a 70% t-butyl-hydroperoxide water solution with toluene according to the procedure according to the procedure described by K.B. Sharpless, et al. Journal of Organic Chemistry, 1983, 48 3607.) solution. Immediately after the addition of the hydroperoxide solution, 6.2 grams of a 50:50 (by weight) mixture of cuprous chloride and cuprous acetate dissolved in 20-30 ml of tetrahydrofuran or 20-30 ml of absolute ethanol. The reaction mixture was maintained at 70°C for 24 hours. The EPDM rubber solution was precipitated into a threefold excess of methanol using a high speed Waring Blender for agitation. The EPDM rubber was dried in vacuo at 25°C and then dissolved in toluene and precipitated into methanol a second time. The peroxidized EPDM rubber was dried in vacuo at 25°C for 48 hours.

The level of active oxygen in the EPDM rubber was determined based on iodine liberation in a modification of method III as described by R.D. Mair and Alda J. Graupner; Analytical Chemistry, 1964, 36, 194. The active oxygen was determined to be 836 ppm.

## Example 2

Using the procedure of Example 2 of Ser. No. 589,368, a peroxidized elastomer was prepared as follows.

In a 4-liter resin kettle 400 grams of an ethylene/propylene/dicyclopentadiene were dissolved in 2700 grams of chlorobenzene. The EPDM rubber dissolved readily in three and one half hours by heating the solution to 70°C. The resin kettle was charged with 120 grams of a 40% anhydrous t-butyl hydroperoxide in toluene solution (prepared as in Example 1). Immediately after the addition of the hydroperoxide solution, 20 grams of a 6% cobalt solution as cobaltous naphthenate in mineral spirits and 1.7 grams of cobaltous acetylacetonate dissolved in 22 milliliters of tetrahydrofuran was added. The reaction mixture was maintained at 70-72°C for 8 hours. The EPDM rubber solution was precipitated into a threefold excess of methanol using a high speed Waring Blender for agitation. The EPDM rubber was dried in vacuo at 25°C and then dissolved in toluene and precipitated into methanol a second time. The peroxidized EPDM rubber was dried in vacuo at 25°C for 48 hours. The level of active oxygen as determined by the method cited in Example 1 was 1172 ppm.

## Example 3

Approximately 200 grams of the peroxidized elastomer prepared in Example 2 were dissolved in 800 grams of styrene monomer. The styrene peroxidized EPDM solution was added to a 4-liter baffled reaction kettle. The reaction temperature was raised to 140°C with agitation provided by two propellers at a speed of 300 rpm. Once the reaction had reached 21% conversion as determined by sample aliquot analysis, 1500 grams of water containing 5% poly(vinyl) alcohol were added. The resulting suspension was heated and stirred (as above) for six hours. The beads formed were washed with 5% hydrochloric acid solution and then water. The beads were dried under vacuum at 90°C. The overall conversion was 99.5% based on monomer and EPDM rubber added.

The level of polystyrene grafted (chemically bound) to the EPDM was determined by subjecting 20 grams of beads to Soxhlet extraction with refluxing methyl ethyl ketone for 120 hours. The methyl ethyl ketone solvent was then poured into methanol to coagulate the non-grafted polystyrene. The level of non-grafted polystyrene was 53% (8.48 grams) and had a peak molecular weight of 167,000. The level of grafted polystyrene was 47% (11.52 grams of methyl ethyl ketone insolubles).

The EPDM-g-polystyrene beads were stabilized with 5.47 grams of Ethanox®330 and 5.51 grams of Mark®2112 antioxidant then extruded and injection molded on standard processing equipment. The specimens molded were tested according to the ASTM standards cited (Table I).

### Table I

| | |
|---|---|
| % EPDM Rubber | 20 |
| Tg (°C) | |
|   grafted PS matrix | 106 |
|   non-grafted PS matrix | 106 |
| Tensile strength (psi) | 5,770 |
| Flexural modulus (psi) | 307,000 |
| Elongation (%) | 28.5 |
| Notched Izod (ft-lbs/in) | 7.3 |
| Gardner Falling Weight Index (in-lbs) | 280 |
| DTUL (°F) | 174 |

To further assess the effectiveness of the EPDM-graft-polystyrene structure at low rubber levels, the test specimens were converted to grinds and 600 grams were melt compounded with 900 grams of polystyrene with peak molecular weight of 172,000. Test specimens were again molded on conventional injection molding equipment (Table II).

## Table II

| | |
|---|---|
| % EPDM Rubber | 8 |
| Tg (°C) | |
| grafted PS matrix | 106 |
| crystal PS matrix | 107 |
| | |
| Tensile strength (psi) | 5,800 |
| Flexural modulus (psi) | 431,000 |
| Elongation (%) | 14.5 |
| Notched Izod (ft-lbs/in) | 3.1 |
| Gardner Falling Weight Index | |
| (in-lbs) | 112 |
| DTUL (°F) | 179.5 |

Example 4

Approximately 200 grams of peroxidized elastomer, as prepared in Example 2, containing 1012 ppm of active oxygen, were dissolved in 350 grams of chlorobenzene in a 3 pint pressure reactor. Once all the rubber was dissolved 200 grams of methyl methacrylate monomer were added to the reactor and the temperature raised to 132°C for six hours. The polymer mass was precipitated in a threefold excess of methanol using a Waring Blender. The polymer crumb obtained was dried under vacuum at 100°C. The total of EPDM-g-PMMA recovered was 384 grams (96% conversion). Soxhlet extraction of 12 grams of the EPDM-g-PMMA with methyl ethyl ketone for 118 hours revealed 2.7 grams of non-grafted PMMA (46.9%) with peak molecular weight of 187,000. The level of PMMA grafted to the EPDM rubber was 53.1%. The glass transition temperature of both the grafted and non-grafted PMMA was 101.5°C.

Approximately 372 grams of the EPDM-g-PMMA was mixed with 723 grams of crystal PMMA matrix - (prepared by techniques known in the art), 6.1 grams of Ethanox®330 and 6.0 grams of Mark®2112 antioxidant. The crystal PMMA matrix had a glass transition temperature of 105°C and a peak molecular weight of 303,000. Test specimens of the above composition were prepared using standard processing equipment (Table III).

## Table III

| | |
|---|---|
| % EPDM Rubber | 18 |
| Tensile strength (psi) | 6,757 |
| Flexural modulus (psi) | 325,000 |
| Elongation (%) | 42 |
| Notched Izod (ft-lbs/in) | 5.2 |
| Gardner Falling Weight Index | |
| (in-lbs) | 218 |
| DTUL (°F) | 167 |

Example 5

Approximately 200 grams of the peroxidized elastomer prepared in Example 1 were dissolved in 375 grams of chlorobenzene in a 3 pint pressure reaction vessel. Once all the rubber was dissolved 200 grams of methyl methacrylate monomer were added to the reactor and the temperature raised to 135°C for 5.5 hours. The polymer was precipitated in a threefold excess of methanol using a Waring Blender. The polymer crumb obtained was dried under vacuum at 100°C. The total of EPDM-g-PMMA recovered was 365 grams (91% conversion). Soxhlet extraction of 15 grams of the EPDM-g-PMMA with methyl ethyl ketone for 112 hours revealed 3.71 grams of nongrafted PMMA (55%) with peak molecular weight of 209,000. The level of PMMA grafted to the EPDM rubber was 45%. The glass transition temperature of both the grafted and non-grafted PMMA was 102.5°C.

Approximately 350 grams of the EPDM-g-PMMA was mixed with 714 grams of Dylark®332 (ARCO Chemical Co.), a styrene/maleic anhydride copolymer (11.5% MA). A mixture of Mark®2112 (6.1 grams) and Irganox®1076 (4.3 grams) was added. The PMMA graft, due to thermodynamic miscibility with styrene/maleic anhydride copolymers (Belgian 767,155), acts as a coupling agent between the EPDM rubber and the S/MA copolymer. The composition was pelletized and test specimens were molded resulting in the following physical properties (Table IV).

## Table IV

| | |
|---|---|
| % EPDM Rubber | 18 |
| Tg (°C) | |
|     PMMA Graft | 102.5°C |
|     styrene/maleic anhydride | |
|       copolymer | 127°C |
|     S/MA:EPDM-g-PMMA | 122°C |
| | |
| Tensile strength (psi) | 5500 |
| Flexural modulus (psi) | 327,000 |
| Elongation (%) | 34 |
| Notched Izod (ft-lbs/in) | 4.9 |
| Gardner Falling Weight Index | |
|   (in-lbs) | 168 |
| DTUL (°F) | 207 |

## Example 6

Approximately 200 grams of the peroxidized elastomer prepared in Example 1 were dissolved in 375 grams of chlorobenzene in a 3 pint pressure reaction vessel. One all the rubber had dissolved, 47 grams of N-phenyl maleimide and 153 grams of methyl methacrylate were added and the temperature was raised to 140°C for 6.5 hours. The polymer mass was precipitated into a fourfold excess of methanol using a Waring Blender. The polymer crumb obtained was dried under vacuum at 110°C. The total of EPDM-g-MMA/NPMI recovered was 397 grams (99.2% conversion). Soxhlet extraction of 25 grams of EPDM-g-MMA/NPMI with methyl ethyl ketone for 122 hours revealed 5.8 grams (47%) of non-grafted MMA/NPMI with peak molecular weight of 188,000. The level of MMA/NPMI grafted to the EPDM rubber was 53%. The glass transition temperature of both the grafted and non-grafted MMA/NPMI was 142.5°C. The MMA/NPMI copolymer grafted to the EPDM rubber contained 23.5% by weight of N-phenyl maleimide.

Crystal MMA/NPMI copolymer was prepared by charging each of 10 citrate bottles with 53.5 grams of methyl methacrylate, 16.5 grams of N-phenyl maleimide, 140 grams of distilled water, 10 ml of a 9.1 weight % tricalcium phosphate in water solution as the suspending agent, 0.003 grams of sodium bisulfite, 0.14 g of t-butylperoctoate and 0.06 g t-butylperbenzoate. The citrate bottles were placed in a bottle polymerizer at 95°C for three hours then 135°C for two hours.

The resulting MMA/NPMI copolymer beads were isolated, washed with methanol and dried prior to use in compounding.

The copolymer was analyzed for composition and found to contain 76.5 weight percent methyl methacrylate and 23.5 weight percent N-phenyl maleimide. The copolymer was tested and found to have a Tg of 143°C.

MMA/NPMI beads (670 grams) were mixed with 330 grams of the EPDM-g-MMA/NPMI. This physical mixture was stabilized with 5.2 grams of Mark®2112 and 6.0 grams of Ethanox®330. The above composition was pelletized and then test specimens were molded for property analysis (Table V).

## Table V

| | |
|---|---:|
| % EPDM Rubber | 16.5 |
| Tensile strength (psi) | 8350 |
| Flexural modulus (psi) | 325,000 |
| Elongation (%) | 32 |
| Notched Izod (ft-lbs/in) | 4.2 |
| Gardner Falling Weight Index (in-lbs) | 208 |
| DTUL (°F) | 247 |

Example 7

Approximately 800 grams of EPDM-g-PMMA as described in Example 4 were prepared.

A styrene/dibromostyrene/maleic anhydride (53.5/37.3/16) terpolymer was found to be thermodynamically miscible with PMMA as analyzed by DSC.

| | Tg (°C) |
|---|---:|
| S/DBS/MA | 143 |
| PMMA | 101.5 |
| S/DBS/MA:PMMA (50:50) | 124 |

Thus, 375 grams of EPDM-g-PMMA was mixed with 723 grams of crystal S/DBS/MA terpolymer, 5.2 grams of Mark®2112 antioxidant, 6.0 grams of Ethanox®330, and 49.4 grams antimony oxide ($Sb_2O_3$). The composition was extruded, pelletized and injection molded into test specimens for property analysis (Table VI).

## Table VI

| | |
|---|---:|
| % EPDM Rubber | 18 4 |
| Tg (°C) | |
|   S/DBS/MA | 143 |
|   Grafted PMMA | 101.5 |
|   S/DBS/MA: EPDM-g-PMMA | 135 |
| Tensile strength (psi) | 6000 |
| Flexural modulus (psi) | 316,000 |
| Notched Izod (ft-lbs/in) | 4.2 |
| Gardner Falling Weight Index (in-lbs) | 184 |
| Elongation (%) | 35 |
| DTUL (°F) | 226 |
| UL Flammability Rating | V-0 |
| LOI | 30 |

### Example 8

A styrene/maleic anhydride/N-phenyl maleimide terpolymer (81.5/12.5/5) was found to be thermodynamically miscible with PMMA as analyzed by DSC.

|  | Tg (°C) |
|---|---|
| S/MA/NPMI | 138 |
| PMMA | 101.5 |
| S/MA/NPMI:PMMA (50:50) | 120 |

Thus, 375 grams of EPDM-g-PMMA was mixed with 723 grams of crystal S/MA/NPMI terpolymer, 5.1 grams Mark®2112, and 6.1 grams Ethanox®330. The composition was extruded, pelletized, and injection molded into test specimens for property analysis (Table VII).

### Table VII

| | |
|---|---|
| % EPDM Rubber | 18.4 |
| Tg (°C) | |
| S/MA/NPMI | 138 |
| Grafted PMMA | 101.5 |
| S/MA/NPMI:EPDM-g-PMMA | 131.5 |
| Tensile strength (psi) | 7200 |
| Flexural modulus (psi) | 330,000 |
| Elongation (%) | 29 |
| Notched Izod (ft-lbs/in) | 4.7 |
| Gardner Falling Weight Index (in-lbs) | 184 |
| DTUL (°F) | 214 |

### Example 9

Approximately 300 grams of peroxidized EPDM rubber having 1120 ppm active oxygen was prepared according to Example 2. The 300 grams of peroxidized EPDM were dissolved in 625 grams of chlorobenzene in a 3 pint pressure reaction vessel at 60°C. The reactor was charged with 300 grams of a comonomer mixture comprised of 90% styrene monomer and 10% methacrylic acid (MAA) monomer. The reactor was heated to 140°C for four hours. The polymer mass obtained was precipitated in a threefold excess of methanol using a Waring Blender. The polymer crumb obtained was dried under vacuum at 110°C. The total EPDM-g-S/MAA recovered was 580 grams (96.1% conversion). Soxhlet extraction of 26 grams of the EPDM-g-S/MAA with methyl ethyl ketone for 121 hours revealed 5.28 grams (44%) of non-grafted S/MAA with peak molecular weight of 187,000. The level of S/MAA grated to the EPDM rubber was 56%. The glass transition temperature of both the grafted and non-grafted S/MAA was 123°C. The S/MAA copolymer grafted to the EPDM contained 9.8% by weight of methacrylic acid.

Crystal styrene/methacrylic acid copolymer containing 9.8% by weight methacrylic acid was prepared by batch bulk polymerization of a mixture of 2856 grams of styrene monomer (95.2%), 144 grams of methacrylic acid and 3.2 grams of benzoyl peroxide in a 1-gallon pressure reaction vessel at 110°C. The polymerization was short stopped at 31.2% conversion and the polymer recovered by precipitation in methanol. The copolymer had a peak molecular weight of 257,000 and a glass transition temperature of 123.5°C.

A mixture of 554 grams of the EPDM-g-S/MAA and 920 grams of the S/MAA copolymer was stabilized with 7.2 grams of Mark®2112 and 4.3 grams of Ethanox®330. The mixture was extruded, pelletized and test specimens were injection molded for property analysis (Table VIII).

## Table VIII

| | |
|---|---|
| % EPDM Rubber | 18.1 |
| Tensile strength | 8000 |
| Flexural modulus (psi) | 340,000 |
| Elongation | 32% |
| Notched Izod (ft-lbs/in) | 6.6 |
| Gardner Falling Weight Index (in-lbs) | 216 |
| DTUL (°F) | 210 |

## Example 10

Approximately 300 grams of peroxidized EPDM rubber having 1196 ppm active oxygen were prepared according to Example 2. The 300 grams of peroxidized EPDM were dissolved in 650 grams of chlorobenzene in a 3 pint pressure reaction vessel at 62°C. The reactor was equipped with a pressure equalizing addition funnel which was charged with 300 grams of a comonomer solution comprised of 75% styrene and 25% N-phenyl maleimide. The temperature of the resin kettle was raised to 110°C. At this point, dropwise addition of the styrene/N-phenyl maleimide solution was initiated and maintained at a rate of 15 grams/5 minutes. The temperature of the reaction was raised to 130°C and maintained for 100 minutes at which time the polymer mass was diluted with 300 grams of chlorobenzene and precipitated into a fourfold excess of methanol in a Waring Blender. The pale yellow crumb recovered was dried under vacuum at 120°C. The total of EPDM-g-S/NPMI recovered was 530 grams (88.3% conversion). Soxhlet extraction of 50 grams of the EPDM-g-S/NPMI with methyl ethyl ketone for 115 hours revealed 10 grams (45%) of non-grafted S/NPMI copolymer with peak molecular weight of 112,000. The level of S/NPMI grafted to the EPDM rubber was 55%. The glass transition temperature of both the grafted and non-grafted S/NPMI was 150°C. The S/NPMI copolymer grafted to the EPDM was determined to contain 30% (by weight) of N-phenyl maleimide.

Crystal styrene/N-phenyl maleimide copolymer containing 30% by weight of N-phenyl maleimide was prepared according to the following procedure. A 2-liter resin kettle was charged with 800 grams of styrene. The resin kettle was equipped with an addition funnel containing 475 grams of styrene, 425 grams of N-phenyl maleimide and 6.5 grams of benzoyl peroxide. The temperature of the resin kettle was raised to 117°C at which time a continuous addition of the styrene/N-phenyl maleimide/ benzoyl peroxide solution was started and maintained over a 2.0 hour period. Once all of the S/NPMI/initiator solution was added the reaction was short stopped with hydroquinone/tetrahydrofuran solution. The polymer was recovered by precipitation into a fourfold excess of methanol. The polymer powder was dried to a constant weight of 680 grams (40% conversion). Analysis of the styrene/N-phenyl maleimide copolymer revealed a peak molecular weight of 155,000; a glass transition temperature of 151°C; an an N-phenyl maleimide content of 30.8% by weight.

A mixture of 680 grams of crystal S/NPMI copolymer and 380 grams of EPDM-g-S/NPMI was stabilized with 5.5 grams of Mark®2112 and 6.0 grams of Ethanox®330. The mixture was extruded, pelletized and test specimens were injection molded for property analysis (Table IX).

## Table IX

| | |
|---|---|
| % EPDM Rubber | 19.7 |
| Tensile strength (psi) | 6400 |
| Flexural modulus (psi) | 345,000 |
| Elongation (%) | 32 |
| Notched Izod (ft-lbs/in) | 4.4 |
| Gardner Falling Weight Index (in-lbs) | 184 |
| DTUL (°F) | 250 |

Example 11

Approximately 200 grams of peroxidized EPDM rubber having 1072 ppm, active oxygen were prepared according to Example 2. The 300 grams of peroxidized EPDM were dissolved in 400 grams of chlorobenzene in a 3 pint pressure reaction vessel at 62°C. The reactor was equipped with a pressure equalizing addition funnel. The reactor was charged with 150 grams of styrene. The addition funnel was charged with a chlorobenzene/maleic anhydride solution (100 g/80g). The temperature of the reaction vessel was raised to 132°C; once the temperature reached 100°C the addition of the chlorobenzene/maleic anhydride solution was commenced at a rate of 10 grams/minute. Once all the chlorobenzene/maleic anhydride solution had been added the reaction was short stopped with hydroquinone/tetrahydrofuran solution. The polymer mass was diluted with 300 grams of chlorobenzene and precipitated into a fourfold excess of methanol in a Waring Blender. The polymer crumb was dried under vacuum at 120°C. The total EPDM-g-S/MA recovered was 400 grams (93%). Soxhlet extraction of 20 grams of the EPDM-g-S/MA with methyl ethyl ketone for 122 hours revealed 4.7 grams (48%) of non-grafted S/MA copolymer with peak molecular weight of 121,000. The level of S/MA grafted to the EPDM rubber was 52.3%. The glass transition temperature of both the grafted and non-grafted S/MA was 152°C. The S/MA grafted to the EPDM rubber was determined to contain 25% maleic anhydride.

A crystal styrene/maleic anhydride copolymer was prepared in a 4-liter resin kettle by adding in a continuous manner a styrene/maleic anhydride/benzoyl peroxide solution (400/200/0.45 grams) to 1200 grams of styrene at 115°C. The reaction was carried to 23% conversion yielding 414 grams of S/MA copolymer having a peak molecular weight of 152,000 and a Tg = 153°C.

A mixture of 414 grams of S/MA copolymer and 246 grams of EPDM-g-S/MA was stabilized with 5.0 grams of Mark®2112 and 5.0 grams of Ethanox®330. The mixture was extruded, pelletized and test specimens were injection molded for property analysis (Table X).

## Table X

| | |
|---|---|
| % EPDM Rubber | 18.6 |
| Tensile strength (psi) | 6750 |
| Flexural modulus (psi) | 347,000 |
| Elongation (%) | 33 |
| Notched Izod (ft-lbs/in) | 4.4 |
| Gardner Falling Weight Index (in-lbs) | 182 |
| DTUL (°F) | 246 |

Example 12

Approximately 350 grams of an EPDM-grafted with styrene/N-phenyl maleimide was prepared in a manner similar to Example 9 with the exception that the proportion of styrene to N-phenyl maleimide in to comonomer solution was 50:50. The proportionate increase in N-phenyl maleimide concentration resulted in a styrene/N-phenyl maleimide copolymer graft having 40 weight % N-phenyl maleimide. The level of S/NPMI grafted to EPDM was 47% as determined by MEK extraction technique. The S/NPMI graft copolymer had a peak molecular weight of 118,000 and a Tg = 179°C.

Approximately 339 grams of the EPDM-g-S/NPMI and 457 grams of Lustran®-31 (Styrene/acrylonitrile copolymer, Monsanto Co.) were stabilized with 4.0 grams of Mark®2112 and 3.9 grams of Ethanox®330. The mixture was extruded, pelletized and test specimens were injection molded Table XI). Since the basis of this invention is dependent on the graft being identical in composition to or thermodynamically miscible with the crystal polymer matrix which is to be impact modified, the S/NPMI:S/AN combination as taught in U.S. 4,374,951 fulfills the requirement of miscibility.

### Table XI

| | |
|---|---|
| % EPDM Rubber | 20 |
| Tg°C | |
| SAN | 109 |
| Grafted S/NPMI | 179 |
| SAN:EPDM-g-S/NPMI | 128.5 |
| | |
| Tensile strength (psi) | 6330 |
| Flexural modulus (psi) | 310,000 |
| Elongation (%) | 28 |
| Notched Izod (ft-lbs/in) | 5.9 |
| Gardner Falling Weight Index (in-lbs) | 152 |
| | |
| DTUL (°F) | 204 |

Example 13

The thermodynamic miscibility of poly(vinyl chloride) with polymethylmethacrylate and with methyl methacrylate/N-phenyl maleimide copolymer is documented in the International Journal of Polymer Materials, 5, 99, (1976); and British Patent 1,293,542 respectively.

Thus, EPDM-g-PMMA and EPDM-g-MMA/NPMI as prepared by this invention in Example 4 and Example 6 respectively were melt processed with a poly(vinyl chloride) with an intrinsic viscosity of 0.8. Specimens were injection molded to assess properties (Table XII).

### Table XII

|                        | EPDM-g-PMMA | EPDM-g-MMA/NPMI |
| ---------------------- | ----------- | --------------- |
| Level in PVC           | 16 phr      | 12 phr          |
| PVC Properties:        |             |                 |
| Notched Izod (ft-lbs-in) | 7.4       | 13.2            |
| DTUL (°F)              | 154         | 161             |

Example 14

The thermodynamic miscibility of poly)2,6-dimethyl-1,4-phenylene)ether, PPO® resin (General Electric Co.) and polystyrene is documented in Polym. Eng. Sci., 10 , 133 (1970).

Approximately 200 grams of the peroxidized elastomer as prepared in Example 2 were dissolved in 200 grams of styrene and 300 grams of chlorobenzene. The styrene/peroxidized EPDM/chlorobenzene solution was added to a 1-liter resin kettle. The reaction temperature was raised to 140°C for six hours. The polymer mass was precipitated in a threefold excess of methanol using a Waring Blender. The polymer crumb obtained was dried under vacuum at 100°C. The total EPDM-g-PS recovered was 392 grams (97.4% conversion). Soxhlet extraction of the EPDM-g-PS with methyl ethyl ketone for 110 hours found 45% of the polystyrene chains to be grafted. The polystyrene had a glass transition temperature of 104°C and a peak molecular weight of 146,000.

Approximately, 180 grams of EPDM-g-polystyrene, 90 grams of homopolystyrene and 372 grams of PPO® resin were mixed. The composition was extruded, pelletized and injection molded into test specimens for property analysis (Table XIII).

### Table XIII

| % EPDM Rubber                      | 14      |
| ---------------------------------- | ------- |
| **Tg(°C)**                         |         |
| PPO® resin                         | 218     |
| Polystyrene                        | 103     |
| Polystyrene Graft                  | 104     |
| PPO/PS/EPDM-g-PS                    | 180     |
| Tensile strength (psi)             | 7800    |
| Flexural modulus (psi)             | 340,000 |
| Elongation (%)                     | 62      |
| Notched Izod (ff-lbs/in)           | 8.4     |
| Gardner Falling Weight Index (in-lbs) | 320+ |
| DTUL (°F)                          | 280     |

It will be evident from the foregoing that various modifications can be made to this invention. Such, however, are considered as being within the scope of the invention.

Claims

1. A moldable composition comprising (i) a thermoformable plastic resin, (ii) an elastomer grafted with from about 40 to about 60 weight percent of a polymer matrix formed by reacting an elastomer having random dialkyl or alkyl aryl peroxide functionality with a free radical polymerizable monomer, the polymer matrix being thermodynamically miscible with the thermoformable plastic resin, and optionally (iii) a reinforcing filler.

2. The composition of claim 1 in which said elastomer is selected from ethylene/propylene/1-4-hexadiene, ethylene/propylene/dicyclopentadiene and butyl rubber.

3. The composition of claim 1 or claim 2 in which the compositions of the thermoformable plastic resin and the grafted polymer matrix are identical.

4. The composition of any one of claims 1 to 3 in which said thermoformable plastic resin has a peak molecular weight within the range of from about 100,000 to about 400,000.

5. The composition of any one of claims 1 to 4 in which said peroxidized elastomer has a peak molecular weight within the range of from about 100,000 to about 1,000,000.

6. The composition of any one of claims 1 to 5 in which said grafted polymer matrix has a peak molecular weight within the range of from about 10,000 to about 300,000.

7. The composition of any one of claims 1 to 6 in which said grafted elastomer is selected from EPDM-graft-polystyrene; EPDM-graft-polymethylmethacrylate; EPDM-graft-methylmethacrylate/N-phenyl-maleimide copolymer; EPDM-graft-styrene/methacrylic acid copolymer; EPDM-graft-styrene/N-phenylmaleimide copolymer; and EPDM-graft-styrene/maleic anhydride copolymer.

8. The composition of any one of claims 1 to 7 in which said elastomer grafted with a polymer matrix is present in an amount within the range of from about 1 to about 50 weight percent and said thermoformable plastic resin is present in an amount within the range of from about 50 to about 99 weight percent.

9. The composition of any one of claims 1 to 8 in which said thermoformable plastic resin is selected from thermoplastic resins selected from the group consisting of polystyrenics, poly (vinyl chloride), nylons, polyphenylene oxide, polycarbonate, polyacrylates and polyesters, and thermosetting resins selected from the group consisting of unsaturated polyesters and epoxides.

10. The composition of any one of claims 1 to 9 in which said grafted elastomer is EPDM-graft-polymethylmethacrylate and said thermoformable plastic resin is selected from poly(vinyl chloride), styrene/maleic anhydride copolymer, styrene/dibromostyrene/maleic anhydride terpolymer, and styrene/N-phenyl maleimide copolymer.

11. The composition of any one of claims 1 to 9 in which said grafted elastomer is EPDM-graft-polystyrene and said thermoformable plastic resin is polyphenylene oxide.

12. A method of producing a molded composition which comprises forming a blend comprising a thermoformable plastic resin and an elastomer grafted with from about 40 to about 60 weight percent of a polymer matrix formed by reacting an elastomer having random dialkyl or alkyl aryl peroxide functionality with a free radical polymerizable monomer, the polymer matrix being thermodynamically miscible with the thermoformable plastic resin, and molding the resulting blend, optionally in contact with a reinforcing filler.

13. A molded composition comprising a continuous phase comprising a thermoformable plastic resin and a disperse phase within the continuous phase, the disperse phase being an elastomer grafted with from about 40 to about 60 weight percent of a polymer matrix formed by reacting an elastomer having random dialkyl or alkyl aryl peroxide functionality with a free radical polymerizable monomer, in which the polymer matrix is thermodynamically miscible with the thermoformable plastic resin and is part of the continuous phase, the elastomer grafted with a polymer matrix being present in the thermoformable plastic resin in an amount sufficient to improve the impact resistance of the thermoformable plastic resin upon molding.

14. A method of improving the impact resistance of a thermoformable plastic resin upon molding which comprises incorporating into a continuous phase thermoformable plastic resin a disperse phase comprising an elastomer grafted with from about 40 to about 60 weight percent of a polymer matrix formed by reacting an elastomer having random dialkyl or alkyl aryl peroxide functionality with a free radical polymerizable monomer, in which the the polymer matrix is thermodynamically miscible with the thermoformable plastic resin and is part of the continuous phase, the elastomer grafted with a polymer matrix being present in the thermoformable plastic resin in an amount sufficient to improve the impact resistance of the thermoformable plastic resin upon molding.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | JP-A-60 219 251 (ATLANTIC RICHFIELD) <br> * Claims; examples; no abstract in English available * <br><br> ----- | 1-14 | C 08 L 51/06 |
| | | | **TECHNICAL FIELDS SEARCHED (Int. Cl.4)** <br><br> C 08 L 51/06 |

The present search report has been drawn up for all claims

| Place of search THE HAGUE | Date of completion of the search 28-01-1986 | Examiner FOUQUIER J.P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82